# EUROPEAN PATENT SPECIFICATION

(11) **EP 4 099 489 B1**
(45) Date of publication and mention of the grant of the patent: **16.04.2025**
(21) Application number: 21886759.6
(22) Date of filing: 26.10.2021
(51) Int. Cl.: H01M 50/209, H01M 50/572, H01M 10/42, H01M 10/667

(54) **BATTERY PACK COMPRISING HEAT DISSIPATION STRUCTURE OF PROTECTIVE CIRCUIT MODULE USING HEAT DISSIPATION TAPE**
BATTERIEPACK MIT WÄRMEABLEITUNGSSTRUKTUR EINES SCHUTZSCHALTUNGSMODULS UNTER VERWENDUNG EINES WÄRMEABLEITBANDES
BLOC-BATTERIE COMPRENANT UNE STRUCTURE DE DISSIPATION DE CHALEUR DE MODULE DE CIRCUIT DE PROTECTION AU MOYEN D'UNE BANDE DE DISSIPATION DE CHALEUR

(30) Priority: 29.10.2020 KR 20200142241
(43) Date of publication of application: 07.12.2022
(73) Proprietor: LG Energy Solution, Ltd., Seoul 07335 (KR)
(72) Inventor: OH, Sung Jin, Daejeon 34122 (KR)
(74) Representative: Plasseraud IP
(86) International application number: PCT/KR2021/015102
(87) International publication number: WO 2022/092765

(56) References cited:
- WO-A1-2019/073879
- CN-U- 208 142 271
- CN-U- 208 142 271
- JP-A- 2019 160 622
- KR-A- 20110 016 821
- KR-A- 20110 016 821
- KR-A- 20140 050 293
- KR-A- 20150 027 579
- KR-A- 20150 027 579
- KR-A- 20160 039 790
- KR-A- 20170 025 384
- KR-A- 20170 025 384
- KR-A- 20200 081 426
- KR-A- 20200 081 426

## Description

### BACKGROUND

The disclosure relates to a battery pack, and more specifically, to a pouch-type battery pack including a heat radiation structure using a heat radiation tape.

In the modem society, as technologies for various IT devices including mobile devices and the like are developed and demands therefor increase, the development of technologies for and demands for secondary batteries serving as an energy source for IT devices are increasing.

Secondary batteries may be classified into a cylindrical type, a polygonal type, a pouch type, and the like according to the shape of a case. The shape of a pouch-type secondary battery is easily transformable according to a product, and the pouch-type secondary battery is advantageous in terms of cheap production costs and small weight. Thus, in the recent trends of size reduction/weight reduction, the pouch-type secondary battery is properly applicable to various IT devices such as mobile devices.

Generally, a pouch-type battery pack has a structure in which a protection circuit module (PCM) is installed on a cell terrace part of a plate-shaped battery cell, as for example disclosed in KR20160039790 A. At this time, the outer surface of the protection circuit module (PCM) is covered and wrapped by a PORON tape simply in a " 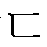 " shape, and the upper portion thereof is covered and wrapped by an upper tape. Here, the Poron tape refers to a tape for buffering an impact transferred to a protection circuit module (PCM) when an impact is applied from the outside to a battery pack.

In a protection circuit module (PCM), an FET mounted on a circuit substrate is mainly the largest heating factor. As described above, in the case of a structure in which a protection circuit module is wrapped by a PORON tape and an upper tape, a state in which heat generated in the protection circuit module (PCM) by the FET is not emitted is maintained, and the temperature further increases due to heat that persists over time. In particular, a protection circuit module applied to a battery pack having a great charging current has a structure in which a plurality of FETs are disposed, and in this case, the above-described limitation related to heating of a protection circuit module (PCM) becomes worse.

The continuous heating of a protection circuit module (PCM) causes limitations such as damage to components, degradation, and the risk of battery pack explosion.

(patent document 1) KR10-2018-0103625A

### DETAILED DESCRIPTION OF EMBODIMENTS

### THENICAL PURPOSE

To overcome the limitations described above, the disclosure provides a pouch-type battery pack including a protection circuit module (PCM) heating improvement structure using a heat radiation tape.

### THENICAL SOLUTION

A battery pack in accordance with the disclosure includes: a plate-shaped battery cell which includes a cell terrace part extending upward on one side surface thereof, and has a pair of electrode leads protruding outward through the cell terrace part; a protection circuit module (PCM) which includes two FETs disposed on each of the upper and lower surfaces thereof, and is installed on the cell terrace part; a heat radiation tape which is attached while wrapping the protection circuit module (PCM) in a " 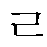 " shape to form a contact region at each of the side surface of the battery cell, a region between the protection circuit module (PCM) and the cell terrace part, and the upper portion of the protection circuit module (PCM); and an upper tape which covers the upper portion of the protection circuit module (PCM) wrapped by the heat radiation tape.

The battery pack may further include: a lower tape which covers the lower surface of the battery cell; a side surface tape which covers each of both side surfaces of the battery cell; and a front surface tape which is attached to the front surface of the battery cell.

The heat radiation tape may include: a first contact part which is in contact with the upper surface of the protection circuit module (PCM); a second contact part which is in contact with a region between the side surface of the protection circuit module (PCM) and the upper end surface of the battery cell in a shape of being bent and extending from the first contact part; a third contact part which is in contact with a region between the lower surface of the protection circuit module (PCM) and the upper surface of the cell terrace part in a shape of being bent and extending from the second contact part; a fourth contact part which is in contact with the side portion of the cell terrace part in a shape of being bent and extending from the third contact part; and a fifth contact part which is in contact with the lower surface of the cell terrace part in a shape of being bent and extending from the fourth contact part.

Accordingly, the heat radiation tape may form an FET-generating heat transfer path through which heat generated from the FET of the protection circuit module (PCM) moves in the direction from the first contact part to the fifth contact part.

At this time, heat moving through the FET-generating heat transfer path may be emitted after being dispersed through each of the first contact part, the fourth contact part, and the fifth contact part.

The heat radiation tape may be made of a material having a high heat conductivity.

Specifically, the heat radiation tape may be made of a graphite tape or a synthetic tape including aluminum (Al).

A method for manufacturing a battery pack including a structure which radiates heat generated from an FET installed in a protection circuit module (PCM), in accordance with the disclosure, includes: a protection circuit module installation step of installing the protection circuit module (PCM) on a cell terrace part by using a heat radiation tape having a " 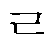 " shape to form a contact region at each of the side surface of a battery cell, a region between the protection circuit module (PCM) and the cell terrace part extending upward on one side surface of the battery cell, and the upper portion of the protection circuit module (PCM); a side surface covering step of covering the side surfaces of the battery cell by attaching a side surface tape to each of both side surfaces of the battery cell; an upper and lower portion covering step of attaching upper and lower tapes to the upper and lower portions of the battery cell, respectively, to cover the upper and lower portions of the battery cell; and a front surface covering step of attaching a front surface tape to the front surface of the battery cell to cover the front surface of the battery cell.

Specifically, in the protection circuit module installation step, the heat radiation tape may be attached in a structure of forming a first contact part which is in contact with the upper surface of the protection circuit module (PCM), a second contact part which is in contact with a region between the side surface of the protection circuit module (PCM) and the upper end surface of the battery cell in a shape of being bent and extending from the first contact part, a third contact part which is in contact with a region between the lower surface of the protection circuit module (PCM) and the upper surface of the cell terrace part in a shape of being bent and extending from the second contact part, a fourth contact part which is in contact with the side portion of the cell terrace part in a shape of being bent and extending from the third contact part, and a fifth contact part which is in contact with the lower surface of the cell terrace part in a shape of being bent and extending from the fourth contact part.

At this time, the heat radiation tape may form an FET-generating heat transfer path through which heat generated from the FET of the protection circuit module moves in the direction from the first contact part to the fifth contact part.

Here, heat moving through the FET-generating heat transfer path may be emitted after being dispersed through each of the first contact part, the fourth contact part, and the fifth contact part.

The heat radiation tape may be made of a material having a high heat conductivity.

Specifically, the heat radiation tape may be made of a graphite tape or a synthetic tape including aluminum (Al).

A battery pack of the disclosure is maintained in a shape overall similar to that of a conventional battery pack. A PORON tape applied to a conventional battery pack is changed into a tape having a high heat conductivity, and the battery pack of the disclosure includes an FET heat radiation structure of dispersively radiating FET-generating heat through a plurality of regions by using the tape.

Accordingly, while pack processibility is maintained at the same level as before, heat generated from an FET of a PCM is effectively dispersively radiated, so that an effect of preventing damage to components, degradation, and the risk of battery pack explosion, which are caused by continuous heating of the PCM, is secured.

### BRIEF DESCRIPTION OF THE DRAWINGS

Exemplary embodiments can be understood in more detail from the following description taken in conjunction with the accompanying drawings, in which:
FIG. 1 is a view illustrating a disassembled state of a battery pack in accordance with the disclosure;
FIG. 2 is a view illustrating a battery pack of the disclosure;
FIG. 3A is a view illustrating a structure of a protection circuit module (PCM) applied to a battery pack of the disclosure, and FIG. 3B is a view illustrating a structure of a protection circuit module (PCM) applied to a battery pack of the disclosure; and
FIG. 4 is a cross-sectional view illustrating a part of a battery pack of the disclosure, the part being viewed from the side direction.

### DETAILED DESCRIPTION OF EMBODIMENTS

Hereinafter, embodiments will be described in detail with reference to the accompanying drawings to be easily carried out by those skilled in the art to which the disclosure belongs. The disclosure may, however, be embodied in various different forms and is not limited to the embodiments set forth herein. In addition, in order to clearly explain the disclosure in the drawings, parts irrelevant to the description are omitted, and similar reference numerals are assigned to similar parts throughout the specification.

Hereinafter, the disclosure will be described in detail with reference to the drawings.

### 1. Battery pack in accordance with the disclosure

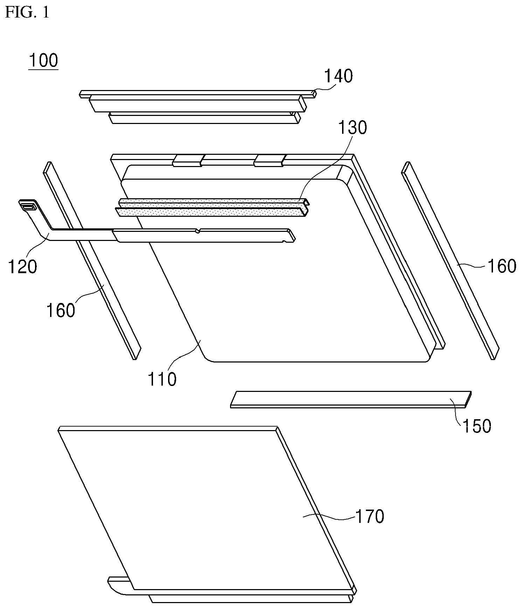

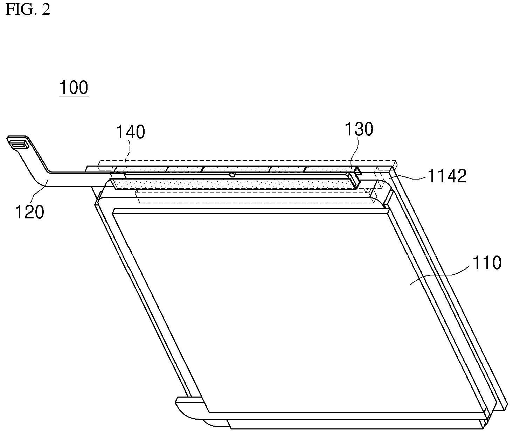

FIG. 1 is an exploded view showing a disassembled state of a battery pack in accordance with the disclosure, and FIG. 2 is a view illustrating a coupled state of components of FIG. 1. Referring to FIG. 1 and FIG. 2, a battery pack 100 of the disclosure largely includes a plate-shaped battery cell 110, a protection circuit module (PCM) 120, a heat radiation tape 130, and first to fourth tapes 140-170.

### 1.1. Plate-shaped battery cell 110

A plates-shaped battery cell has a structure in which an electrode assembly including a positive electrode plate, a negative electrode plate, and a separator is sealed in a pouch, and the pouch may be formed in a multilayer sheet structure wrapping the electrode assembly.

The pouch includes a cell terrace part 1142 extending from one side thereof. The cell terrace part 1142 forms a predetermined region, and a pair of electrode leads of a battery cell protrude outward through the region. In addition, a protection circuit module 120 to be described hereinafter may be stably placed on the cell terrace part 1142.

### 1.2. Protection circuit module (PCM) 120

A protection circuit module provides functions such as battery pack overcharge protection, overdischarge protection, overcurrent protection, and short circuit protection. Such a protection circuit module (PCM) is installed on the cell terrace part 1142 as described above.

More specifically, the protection circuit module has a general structure including: a printed circuit board (PCB) 122 in which printed circuit patterns and various electronic components that may provide an overcharge protection function, an overdischarge protection function, an overcurrent protection function, and a short circuit protection function to the battery cell 110 are gathered; and an external input/output terminal 124 which is electrically connected to the PCB 122 and has a connector 1242 formed at the end thereof to be connectable to an external device.

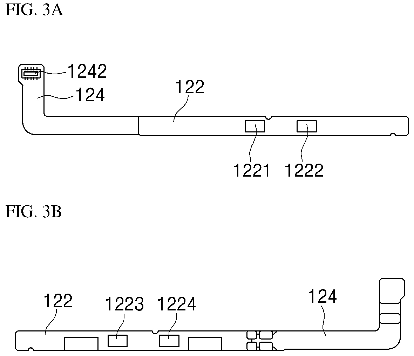

FIG. 3A and FIG. 3B are views illustrating the upper and lower surfaces of a protection circuit module (PCM), respectively. The protection circuit module of the disclosure is a protection circuit module applied to a battery pack having a charging current of 2.0 C or greater. Such a protection circuit module has a structure in which two of FETs 1221, 1222, 1223, and 1224 are installed on each of the upper surface or the lower surface thereof as shown in FIG. 3A and FIG. 3B.

### 1.3. Heat radiation tape 130

A heat radiation tape is attached in a shape of wrapping the protection circuit module (PCM) 120 to form a predetermined heat radiation structure, and thus plays roles of stably fixing the protection circuit module 120 onto the cell terrace part 1142 and radiating heat generated from the protection circuit module 120.

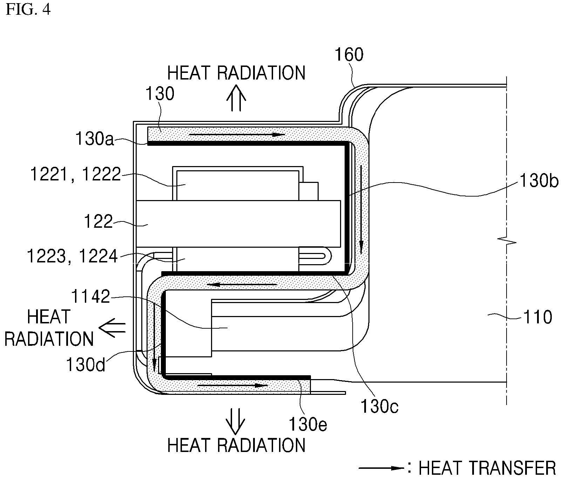

Referring to FIG. 4, the predetermined heat radiation structure may be a structure of forming a contact region at each of the side surface of the battery cell 110, a region between the protection circuit module 120 and the cell terrace part, and the upper portion of the protection circuit module (PCM) 120.

Specifically, the heat radiation tape may be attached in a shape of wrapping the protection circuit module 120 to form a first contact part 130a which is in contact with the upper surface of the protection circuit module 120, a second contact part 130b which is in contact with a region between the side surface of the protection circuit module 120 and the upper end surface of the battery cell 110 in a shape of being bent and extending from the first contact part 130a, a third contact part 130c which is in contact with a region between the lower surface of the protection circuit module 120 and the upper surface of the cell terrace part 1142 in a shape of being bent and extending from the second contact part 130b, a fourth contact part 130d which is in contact with the side portion of the cell terrace part 1142 in a shape of being bent and extending from the third contact part 130c, and a fifth contact part 130e which is in contact with the lower surface of the cell terrace part 1142 in a shape of being bent and extending from the fourth contact part 130d. That is, the heat radiation tape wraps the protection circuit module 120 in a " 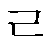 " shape.

The heat radiation tape attached in such a shape may be made of a material having a high heat conductivity. For example, the heat radiation tape may be a graphite tape or a synthetic tape including aluminum (Al).

Accordingly, the heat radiation tape 130 may form a generated heat transfer path in a direction from the first contact part 130a to the second contact part 130b, the third contact part 130c, the fourth contact part 130d, and then the fifth contact part 130e as shown by arrows indicated in FIG. 4. Accordingly, while heat generated from FETs 1221, 1222, 1223, and 1224 moves in the direction of a heat conducting path as described above, the heat may be dispersively radiated through the first contact part 130a, the fourth contact part 130d, and the fifth contact part 130e which are exposed to the outside.

In this principle, the heat radiation tape of the disclosure may bring a result of effectively improving heating of a battery pack 100 by radiating heat generated from the protection circuit module 120.

### 1.4. Upper tape 140

As described above, an upper tape is formed to wrap the upper portion of the protection circuit module (PCM) 120 wrapped by the heat radiation tape 130, and thus plays roles of stably fixing the protection circuit module (PCM) 120 to the cell terrace part 1142 and protecting the protection circuit module from the outside.

### 1.5. Lower tape 150

A lower tape is attached in a shape of wrapping the lower surface of the battery cell 110 to cover the lower surface of the battery cell 110.

### 1.6. Side surface tape 160

A side surface tape is attached in a shape of wrapping each of both side surfaces of the battery cell 110 to cover the both side surfaces of the battery cell 110.

### 1.7. Front surface tape 170

A front surface tape is attached to the front surface of the battery cell 110. Although not separately illustrated in the drawings, a pad print (not shown) indicating pack information including a serial number or the like of a battery pack 100 may be attached to the upper surface of a fourth tape.

The first to fourth tapes 140-170 described above are general components applied to a pouch-type battery pack 100.

### 2. Method for manufacturing a battery pack in accordance with the disclosure

A method for manufacturing a pouch-type battery pack in accordance with the disclosure may include the steps as described hereinafter.

### 2.1. Protection circuit module installation step

A heat radiation tape 130 is attached in a shape of wrapping a protection circuit module 120 to form a predetermined heat radiation structure, and thus the protection circuit module 120 may be installed on a cell terrace part 1142 extending from one side of a plate-shaped battery cell 110.

The predetermined heat radiation structure may be a structure of forming a contact region at each of the side surface of the battery cell 110, a region between the protection circuit module 120 and the cell terrace part 1142, and the upper portion of the protection circuit module 120.

Specifically, as described above, the heat radiation tape may be attached in a shape of wrapping the protection circuit module 120 to form a first contact part 130a which is in contact with the upper surface of the protection circuit module 120, a second contact part 130b which is in contact with a region between the side surface of the protection circuit module 120 and the upper end surface of the battery cell 110 in a shape of being bent and extending from the first contact part 130a, a third contact part 130c which is in contact with a region between the lower surface of the protection circuit module 120 and the upper surface of the cell terrace part 1142 in a shape of being bent and extending from the second contact part 130b, a fourth contact part 130d which is in contact with the side portion of the cell terrace part 1142 in a shape of being bent and extending from the third contact part 130c, and a fifth contact part 130e which is in contact with the lower surface of the cell terrace part 1142 in a shape of being bent and extending from the fourth contact part 130d.

The heat radiation tape 130 is made of a graphite tape or a synthetic tape including aluminum (Al).

Accordingly, a generated heat transfer path is formed in a direction from the first contact part 130a to the second contact part 130b, the third contact part 130c, the fourth contact part 130d, and then the fifth contact part 130e. Heat moving through the path may be dispersively radiated through the first contact part 130a, the fourth contact part 130d, and the fifth contact part 130e which are in contact with the outside. Accordingly, heat generated from the protection circuit module 120 may be effectively emitted.

As described above, the protection circuit module 120 has a structure which is applied to a battery pack having a charging current of 2.0 C or greater and in which two of FETs 1221, 1222, 1223, and 1224 are installed on each of the upper surface or the lower surface thereof as shown in FIG. 3A and FIG. 3B. In the case of the protection circuit module 120 having such a structure, a heating level by an FET which is a main heating factor is high. However, in the disclosure, a heating level may be effectively reduced through the heat radiation structure of the heat radiation tape 130 as described above.

### 2.2. Side surface covering step

In a side surface covering step, the side surfaces of the battery cell 110 are covered by attaching a side surface tape 160 to each of both side surfaces of the battery cell 110.

### 2.3. Upper and lower portion covering step

In an upper and lower portion covering step, an upper tape 140 is attached in a shape of wrapping the upper portion of the battery cell 110 where the protection circuit module 120 is installed, and a lower tape 150 is attached in a shape of wrapping the lower portion of the battery cell 110, such that the upper and lower portions of the battery cell 110 are respectively covered.

### 2.4. Front surface covering step

In a front surface covering step, a front surface tape is attached to the front surface of the battery cell 110. Although not separately illustrated in the drawings, a pad print (not shown) indicating pack information including a serial number or the like of a battery pack 100 may be attached to the upper surface of the front surface tape after the front surface tape is attached.

Although the technical idea of the disclosure has been described in detail with reference to the embodiments, it should be noted that the above embodiments are for illustrative purposes, and not for limitation thereof. In addition, it will be understood by those skilled in the art that various embodiments are possible within the scope of the technical idea of the present invention.

## Claims

1. A battery pack comprising:
a plate-shaped battery cell which includes a cell terrace part extending upward on one side surface thereof, and has a pair of electrode leads protruding outward through the cell terrace part;
a protection circuit module (PCM) which includes two FETs disposed on each of the upper and lower surfaces thereof, and is installed on the cell terrace part;
a heat radiation tape which is attached while wrapping the protection circuit module (PCM) in a " 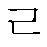 " shape to form a contact region at each of the side surface of the battery cell, a region between the protection circuit module (PCM) and the cell terrace part, and the upper portion of the protection circuit module (PCM); and
an upper tape which covers the upper portion of the protection circuit module (PCM) wrapped by the heat radiation tape.

2. The battery pack of claim 1, further comprising:
a lower tape which covers the lower surface of the battery cell;
a side surface tape which covers each of both side surfaces of the battery cell; and
a front surface tape which is attached to the front surface of the battery cell.

3. The battery pack of claim 1, wherein the heat radiation tape comprises:
a first contact part which is in contact with the upper surface of the protection circuit module (PCM);
a second contact part which is in contact with a region between the side surface of the protection circuit module (PCM) and the upper end surface of the battery cell in a shape of being bent and extending from the first contact part;
a third contact part which is in contact with a region between the lower surface of the protection circuit module (PCM) and the upper surface of the cell terrace part in a shape of being bent and extending from the second contact part;
a fourth contact part which is in contact with the side portion of the cell terrace part in a shape of being bent and extending from the third contact part; and
a fifth contact part which is in contact with the lower surface of the cell terrace part in a shape of being bent and extending from the fourth contact part.

4. The battery pack of claim 3, wherein the heat radiation tape forms an FET-generating heat transfer path through which heat generated from the FET of the protection circuit module (PCM) moves in the direction from the first contact part to the fifth contact part.

5. The battery pack of claim 4, wherein heat moving through the FET-generating heat transfer path is emitted after being dispersed through each of the first contact part, the fourth contact part, and the fifth contact part.

6. The battery pack of claim 4, wherein the heat radiation tape is made of a material having a high heat conductivity.

7. The battery pack of claim 6, wherein the heat radiation tape is made of a graphite tape or a synthetic tape including aluminum (Al).

8. A method for manufacturing a battery pack including a structure which radiates heat generated from an FET installed in a protection circuit module (PCM), the method comprising:
a protection circuit module installation step of installing the protection circuit module (PCM) on a cell terrace part by using a heat radiation tape having a " 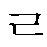 " shape to form a contact region at each of the side surface of a battery cell, a region between the protection circuit module (PCM) and the cell terrace part extending upward on one side surface of the battery cell, and the upper portion of the protection circuit module (PCM);
a side surface covering step of covering both side surfaces of the battery cell by attaching a side surface tape to each of the both side surfaces of the battery cell;
an upper and lower portion covering step of attaching upper and lower tapes to the upper and lower portions of the battery cell, respectively, to cover the upper and lower portions of the battery cell; and
a front surface covering step of attaching a front surface tape to the front surface of the battery cell to cover the front surface of the battery cell.

9. The method of claim 8, wherein in the protection circuit module installation step, the heat radiation tape is attached in a structure of forming a first contact part which is in contact with the upper surface of the protection circuit module (PCM), a second contact part which is in contact with a region between the side surface of the protection circuit module (PCM) and the upper end surface of the battery cell in a shape of being bent and extending from the first contact part, a third contact part which is in contact with a region between the lower surface of the protection circuit module (PCM) and the upper surface of the cell terrace part in a shape of being bent and extending from the second contact part, a fourth contact part which is in contact with the side portion of the cell terrace part in a shape of being bent and extending from the third contact part, and a fifth contact part which is in contact with the lower surface of the cell terrace part in a shape of being bent and extending from the fourth contact part.

10. The method of claim 9, wherein the heat radiation tape forms an FET-generating heat transfer path through which heat generated from the FET of the protection circuit module (PCM) moves in the direction from the first contact part to the fifth contact part.

11. The method of claim 10, wherein heat moving through the FET-generating heat transfer path is emitted after being dispersed through each of the first contact part, the fourth contact part, and the fifth contact part.

12. The method of claim 10, wherein the heat radiation tape is made of a material having a high heat conductivity.

13. The method of claim 12, wherein the heat radiation tape is made of a graphite tape or a synthetic tape including aluminum (Al).

## Patentansprüche

1. Batteriepack, umfassend:
eine plattenförmige Batteriezelle, welche einen Zellenabsatzteil umfasst, welcher sich an einer Seitenfläche davon aufwärts erstreckt, und welche ein Paar Elektrodenkontakte aufweist, welche nach außen durch den Zellenabsatzteil hervorstehen;
ein Schutzkreismodul (PCM), welches zwei FETs umfasst, welche an jeder der oberen und unteren Fläche davon angeordnet sind, und welches an dem Zellenabsatzteil installiert ist,
ein Wärmeabstrahlband, welches angebracht ist, während es das Schutzkreismodul (PCM) in einer " 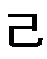 "-Form einhüllt, um einen Kontaktbereich an jedem von der Seitenfläche der Batteriezelle, einem Bereich zwischen dem Schutzkreismodul (PCM) und dem Zellenabsatzteil, sowie dem oberen Abschnitt des Schutzkreismoduls (PMC) zu bilden; und
ein oberes Band, welches den oberen Abschnitt des Schutzkreismoduls (PCM) bedeckt, welches durch das Wärmeabstrahlband eingehüllt ist.

2. Batteriepack nach Anspruch 1, ferner umfassend:
ein unteres Band, welches die untere Fläche der Batteriezelle bedeckt;
ein Seitenflächenband, welches jede der beiden Seitenflächen der Batteriezelle bedeckt; und
ein Vorderflächenband, welches an der Vorderfläche der Batteriezelle angebracht ist.

3. Batteriepack nach Anspruch 1, wobei das Wärmeabstrahlband umfasst:
einen ersten Kontaktteil, welcher mit der oberen Fläche des Schutzkreismoduls (PCM) in Kontakt steht;
einen zweiten Kontaktteil, welcher mit einem Bereich zwischen der Seitenfläche des Schutzkreismoduls (PCM) und der oberen Endfläche der Batteriezelle in einer Form in Kontakt steht, in welcher er gebogen ist und von dem ersten Kontaktteil hervorsteht;
einen dritten Kontaktteil, welcher mit einem Bereich zwischen der unteren Fläche des Schutzkreismoduls (PCM) und der oberen Fläche des Zellenabsatzteils in einer Form in Kontakt steht, in welcher er gebogen ist und von dem zweiten Kontaktteil hervorsteht;
einen vierten Kontaktteil, welcher mit dem Seitenabschnitt des Zellenabsatzteils in einer Form in Kontakt steht, in welcher er gebogen ist und von dem dritten Kontaktteil hervorsteht; und
einen fünften Kontaktteil, welche mit der unteren Fläche des Zellenabsatzteils in einer Form in Kontakt steht, in welcher er gebogen ist und von dem vierten Kontaktteil hervorsteht.

4. Batteriepack nach Anspruch 3, wobei das Wärmeabstrahlband einen FET-Generations-Wärme-Transferpfad bildet, durch welchen Wärme, welche durch den FET des Schutzkreismoduls (PCM) generiert ist, in die Richtung von dem ersten Kontaktteil zu dem fünften Kontaktteil fließt.

5. Batteriepack nach Anspruch 4, wobei Wärme, welche durch den FET-Generations-Wärme-Transferpfad fließt, abgegeben ist, nachdem sie durch jeden von dem ersten Kontaktteil, dem vierten Kontaktteil und dem fünften Kontaktteil dispergiert ist.

6. Batteriepack nach Anspruch 4, wobei das Wärmeabstrahlband aus einem Material gefertigt ist, welches eine hohe Wärmeleitfähigkeit aufweist.

7. Batteriepack nach Anspruch 6, wobei das Wärmeabstrahlband aus einem Graphitband oder einem synthetischen Band gefertigt ist, welches Aluminium (Al) umfasst.

8. Verfahren zum Herstellen eines Batteriepacks umfassend eine Struktur, welche Wärme abstrahlt, welche von einem FET generiert wird, welcher an einem Schutzkreismodul (PCM) installiert ist, wobei das Verfahren umfasst:
einen Schutzkreismodulinstallationsschritt eines Installierens des Schutzkreismoduls (PCM) an einem Zellenabsatzteil durch Verwenden eines Wärmeabstrahlbands, welches eine " 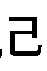 "-Form aufweist, um einen Kontaktbereich an jedem von der Seitenfläche einer Batteriezelle, einem Bereich zwischen dem Schutzkreismodul (PCM) und dem Zellenabsatzteil, welcher sich aufwärts an einer Seitenfläche der Batteriezelle erstreckt, sowie dem oberen Abschnitt des Schutzkreismoduls (PCM) zu bilden;
einen Seitenflächenbedeckungsschritt eines Bedeckens von beiden Seitenflächen der Batteriezelle durch Anbringen eines Seitenflächenbands an jeder der beiden Seitenflächen der Batteriezelle;
einen oberen und unteren Abschnittbedeckungsschritt eines entsprechenden Anbringens von oberen und unteren Bändern an dem oberen und unteren Abschnitt der Batteriezelle, um den oberen und unteren Abschnitt der Batteriezelle zu bedecken; und
einen Vorderflächenbedeckungsschritt eines Anbringens eines Vorderflächenbands an der Vorderfläche der Batteriezelle, um die Vorderfläche der Batteriezelle zu bedecken.

9. Verfahren nach Anspruch 8, wobei, in dem Schutzkreismodulinstallationsschritt, das Wärmeabstrahlband angebracht wird in einer Struktur eines Bildens eines ersten Kontaktteils, welcher mit der oberen Fläche des Schutzkreismoduls (PCM) in Kontakt steht, eines zweiten Kontaktteils, welcher mit einem Bereich zwischen der Seitenfläche des Schutzkreismoduls (PCM) und der oberen Endfläche der Batteriezelle in einer Form in Kontakt steht, in welcher er gebogen ist und von dem ersten Kontaktteil hervorsteht, eines dritten Kontaktteils, welcher mit einem Bereich zwischen der unteren Fläche des Schutzkreismoduls (PCM) und der oberen Fläche des Zellenabsatzteils in einer Form in Kontakt steht, in welcher er gebogen ist und von dem zweiten Kontaktteil hervorsteht, eines vierten Kontaktteils, welcher mit dem Seitenabschnitt des Zellenabsatzteils in einer Form in Kontakt steht, in welcher er gebogen ist und von dem dritten Kontaktteil hervorsteht, und eines fünften Kontaktteils, welcher mit der unteren Fläche des Zellenabsatzteils in einer Form in Kontakt steht, in welcher er gebogen ist und von dem vierten Kontaktteil hervorsteht.

10. Verfahren nach Anspruch 9, wobei das Wärmeabstrahlband einen FET-Generations-Wärme-Transferpfad bildet, durch welchen Wärme, welche durch den FET des Schutzkreismoduls (PCM) generiert wird, in die Richtung von dem ersten Kontaktteil zu dem fünften Kontaktteil fließt.

11. Verfahren nach Anspruch 10, wobei die Wärme, welche durch den FET-Generations-Wärme-Transferpfad fließt, abgegeben wird, nachdem sie durch jeden von dem ersten Kontaktteil, dem vierten Kontaktteil und dem fünften Kontaktteil dispergiert wurde.

12. Verfahren nach Anspruch 10, wobei das Wärmeabstrahlband aus einem Material gefertigt ist, welches eine hohe Wärmeleitfähigkeit aufweist.

13. Verfahren nach Anspruch 12, wobei das Wärmeabstrahlband aus einem Graphitband oder einem synthetischen Band gefertigt ist, welches Aluminium (Al) umfasst.

## Revendications

1. Bloc-batterie comprenant :
une cellule de batterie en forme de plaque qui comporte une partie terrasse de cellule s'étendant vers le haut sur une surface latérale de celle-ci, et présente une paire de fils d'électrode faisant saillie vers l'extérieur à travers la partie terrasse de cellule ;
un module de circuit de protection (PCM) qui comporte deux FET disposés sur chacune des surfaces supérieure et inférieure de celui-ci, et est installé sur la partie terrasse de cellule ;
une bande de rayonnement thermique qui est fixée tout en enveloppant le module de circuit de protection (PCM) sous une forme de « 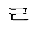 » pour former une région de contact au niveau de chacune de la surface latérale de la cellule de batterie, d'une région entre le module de circuit de protection (PCM) et la partie terrasse de cellule, et de la partie supérieure du module de circuit de protection (PCM) ; et
une bande supérieure qui recouvre la partie supérieure du module de circuit de protection (PCM) enveloppé par la bande de rayonnement thermique.

2. Bloc-batterie selon la revendication 1, comprenant en outre :
une bande inférieure qui recouvre la surface inférieure de la cellule de batterie ;
une bande de surfaces latérales qui recouvre chacune des deux surfaces latérales de la cellule de batterie ;
et
une bande de surface avant qui est fixée à la surface avant de la cellule de batterie.

3. Bloc-batterie selon la revendication 1, dans lequel la bande de rayonnement thermique comprend :
une première partie de contact qui est en contact avec la surface supérieure du module de circuit de protection (PCM) ;
une deuxième partie de contact qui est en contact avec une région entre la surface latérale du module de circuit de protection (PCM) et la surface d'extrémité supérieure de la cellule de batterie sous une forme courbée et s'étendant à partir de la première partie de contact ;
une troisième partie de contact qui est en contact avec une région entre la surface inférieure du module de circuit de protection (PCM) et la surface supérieure de la partie terrasse de cellule sous une forme courbée et s'étendant à partir de la deuxième partie de contact ;
une quatrième partie de contact qui est en contact avec la partie latérale de la partie terrasse de cellule sous une forme courbée et s'étendant à partir de la troisième partie de contact ; et
une cinquième partie de contact qui est en contact avec la surface inférieure de la partie terrasse de cellule sous une forme courbée et s'étendant à partir de la quatrième partie de contact.

4. Bloc-batterie selon la revendication 3, dans lequel la bande de rayonnement thermique forme un trajet de transfert de chaleur générée par FET à travers lequel la chaleur générée par le FET du module de circuit de protection (PCM) se déplace dans la direction de la première partie de contact à la cinquième partie de contact.

5. Bloc-batterie selon la revendication 4, dans lequel la chaleur se déplaçant à travers le trajet de transfert de chaleur générée par FET est émise après avoir été dispersée à travers chacune de la première partie de contact, de la quatrième partie de contact et de la cinquième partie de contact.

6. Bloc-batterie selon la revendication 4, dans lequel la bande de rayonnement thermique est constituée d'un matériau ayant une conductivité thermique élevée.

7. Bloc-batterie selon la revendication 6, dans lequel la bande de rayonnement thermique est constituée d'une bande de graphite ou d'une bande synthétique comportant de l'aluminium (Al).

8. Procédé de fabrication d'un bloc-batterie comportant une structure qui rayonne de la chaleur générée par un FET installé dans un module de circuit de protection (PCM), le procédé comprenant :
une étape d'installation de module de circuit de protection (PCM) consistant à installer le module de circuit de protection (PCM) sur une partie terrasse de cellule en utilisant une bande de rayonnement thermique ayant une forme de « 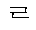 » pour former une région de contact au niveau de chacune de la surface latérale d'une cellule de batterie, d'une région entre le module de circuit de protection (PCM) et la partie terrasse de cellule s'étendant vers le haut sur une surface latérale de la cellule de batterie, et de la partie supérieure du module de circuit de protection (PCM) ;
une étape de recouvrement de surfaces latérales consistant à recouvrir les deux surfaces latérales de la cellule de batterie en fixant une bande de surfaces latérales à chacune des deux surfaces latérales de la cellule de batterie ;
une étape de recouvrement de parties supérieure et inférieure consistant à fixer des bandes supérieure et inférieure aux parties supérieure et inférieure de la cellule de batterie, respectivement, pour recouvrir les parties supérieure et inférieure de la cellule de batterie ; et
une étape de recouvrement de surface avant consistant à fixer une bande de surface avant à la surface avant de la cellule de batterie pour recouvrir la surface avant de la cellule de batterie.

9. Procédé selon la revendication 8, dans lequel dans l'étape d'installation de module de circuit de protection, la bande de rayonnement thermique est fixée dans une structure de formation d'une première partie de contact qui est en contact avec la surface supérieure du module de circuit de protection (PCM), d'une deuxième partie de contact qui est en contact avec une région entre la surface latérale du module de circuit de protection (PCM) et la surface d'extrémité supérieure de la cellule de batterie sous une forme courbée et s'étendant à partir de la première partie de contact, d'une troisième partie de contact qui est en contact avec une région entre la surface inférieure du module de circuit de protection (PCM) et la surface supérieure de la partie terrasse de cellule sous une forme courbée et s'étendant à partir de la deuxième partie de contact, d'une quatrième partie de contact qui est en contact avec la partie latérale de la partie terrasse de cellule sous une forme courbée et s'étendant à partir de la troisième partie de contact, et d'une cinquième partie de contact qui est en contact avec la surface inférieure de la partie terrasse de cellule sous une forme courbée et s'étendant à partir de la quatrième partie de contact.

10. Procédé selon la revendication 9, dans lequel la bande de rayonnement thermique forme un trajet de transfert de chaleur générée par FET à travers lequel la chaleur générée par le FET du module de circuit de protection (PCM) se déplace dans la direction de la première partie de contact à la cinquième partie de contact.

11. Procédé selon la revendication 10, dans lequel la chaleur se déplaçant à travers le trajet de transfert de chaleur générée par FET est émise après avoir été dispersée à travers chacune de la première partie de contact, de la quatrième partie de contact et de la cinquième partie de contact.

12. Procédé selon la revendication 10, dans lequel la bande de rayonnement thermique est constituée d'un matériau ayant une conductivité thermique élevée.

13. Procédé selon la revendication 12, dans lequel la bande de rayonnement thermique est constituée d'une bande de graphite ou d'une bande synthétique comportant de l'aluminium (Al).
